# EUROPÄISCHE PATENTSCHRIFT

(11) **EP 2 265 491 B1**
(45) Veröffentlichungstag und Bekanntmachung des Hinweises auf die Patenterteilung: **04.03.2015**
(21) Anmeldenummer: 09728419.4
(22) Anmeldetag: 09.02.2009
(51) Int. Cl.: B64C 1/06, B64C 1/12, B63B 29/02, E04F 13/00, B61D 17/18, B60R 13/02

(54) **DECKENPANEEL FÜR DIE VERKLEIDUNG DES INNENRAUMS VON FAHRZEUGEN**
CEILING PANEL FOR LINING INTERIOR OF VEHICLES
PANNEAU DE PLAFOND CONÇU POUR REVÊTIR L'ESPACE INTÉRIEUR DE VÉHICULES

(30) Priorität: 02.04.2008 AT 5182008
(43) Veröffentlichungstag der Anmeldung: 29.12.2010
(73) Patentinhaber: FACC AG, 4910 Ried im Innkreis (AT)
(72) Erfinder: KERNMAYER, Georg, A-1180 Wien (AT); STANDHARTINGER, Manfred, A-4752 Riedau (AT)
(74) Vertreter: Sonn & Partner Patentanwälte
(86) Internationale Anmeldenummer: PCT/AT2009/000046
(87) Internationale Veröffentlichungsnummer: WO 2009/121080

(56) Entgegenhaltungen:
- EP-A- 0 894 710
- EP-A- 1 088 749
- EP-A- 1 288 123
- WO-A1-99/11479
- DE-A1-102007 013 904
- DE-C1- 4 443 526
- DE-U1-202006 004 081

## Beschreibung

Die Erfindung betrifft ein Deckenpaneel für die Verkleidung des Innenraums eines Fahrzeugs, insbesondere Flugzeugs, mit einem Kunststoffverbundelement mit an den im Wesentlichen in Fortbewegungsrichtung des Fahrzeuges verlaufenden Seitenrändern angeordneten Elementen zur Befestigung an einer tragenden Struktur des Fahrzeuges oder damit verbundenen Teilen, wobei an dem im Wesentlichen quer zur Fortbewegungsrichtung angeordneten Querrand zumindest eine Fixiereinrichtung und an dem in Fortbewegungsrichtung gesehen gegenüberliegenden Querrand zumindest ein Gegenstück vorgesehen ist, wobei die zumindest eine Fixiereinrichtung komplementär zu dem zumindest einen Gegenstück ausgebildet ist, und durch Zusammenwirken jeder Fixiereinrichtung mit jeweils einem Gegenstück eine formschlüssige Verbindung in im Wesentlichen senkrechter Richtung werkzeuglos herstellbar und wieder lösbar ist.

Weiters betrifft die vorliegende Erfindung eine Deckenverkleidung für den Innenraum eines Fahrzeugs, insbesondere Flugzeugs, mit mehreren in Fortbewegungsrichtung des Fahrzeugs hintereinander angeordneten Deckenpaneelen.

Obgleich die vorliegende Erfindung in erster Linie für die Verwendung in Flugzeugen vorgesehen ist, ist eine Anwendung auch bei anderen Fahrzeugen, bei welchen eine Gewichtsreduktion der Bestandteile wesentlich ist, wie z. B. Schnellbooten, Hochgeschwindigkeitszügen oder dergleichen, denkbar.

Deckenpaneele und andere Abdeckplatten, welche zur Ausgestaltung des Innenraums von Flugzeugen oder dgl. dienen, werden aus Gewichtsgründen zunehmend aus Kunststoffverbundwerkstoffen hergestellt. Die Deckenpaneele dienen zur Verkleidung des Bereichs zwischen den Überkopfgepäckablagebehältern in einem Flugzeug. Zur raschen und einfachen Montage und Demontage befinden sich üblicherweise an den Seitenrändern der Deckenpaneele entsprechende Befestigungselemente, über die eine werkzeuglose Befestigung an der tragenden Struktur oder damit verbundenen Teilen des Flugzeugs möglich ist. Beispielweise beschreibt die AT 404 926 B ein entsprechend ausgestaltetes Deckenpaneel.

Die DE 44 43 526 C1 offenbart den Oberbegriff des Anspruchs 1. Sie zeigt ein Kraftfahrzeug-Schiebedach für einen Dachausschnitt, aus Lamellendachteilen, welche in seitlichen Führungen längsbeweglich geführt sind. Zur Verbesserung der Stabilität bei Gewalteinwirkung oder einem Unfall weist jedes Lamellendachteil über die Breitseite des Dachausschnitts Sicherheitsverhakungen in Form von überlagernden Längskanten auf, welche bei einer Verformung des Lamellenverbands mit korrespondierenden Sicherheitsverhakungen des benachbarten Lamellendachteils hintergreifen und sich damit verkrallen. In den Sicherheitsverhakungen ist eine Dichtung zur Abdichtung des Lamellendachs vorgesehen.

Die WO 99/11479 A1 zeigt ebenfalls ein Schiebedach aus Kunststofflamellen, welche jeweils von einem Trageelement getragen sind, wobei seitlich an den Trageelementen Fixierstifte vorgesehen sind. Die Fixierstifte sind im geschlossenen Zustand des Schiebedachs in Fixiernuten eines benachbarten Schlittenelements aufgenommen, so dass die Kunststofflamellen gegen Bewegungen gesichert sind.

Insbesondere zur Reduktion des Treibstoffverbrauchs geht der Trend zu immer leichteren Flugzeugen, weshalb sämtliche Komponenten eines Flugzeugs, darunter auch die Innenverkleidung, immer leichter hergestellt wird. Darüber hinaus fordern Designer verstärkt glattere Linien auch bei der Gestaltung des Innenraums von Flugzeugen. Diese Designvorgaben erschweren die Konstruktion besonderes leichter Abdeckplatten und Deckenpaneele bei gleichzeitig geforderter hoher Steifigkeit. Wurden früher Deckenpaneele durch das Vorsehen geometrischer Strukturen, wie z. B. Stufen, versteift, ist dies auf Grund der Vorgaben des industriellen Designs an die Entwickler heute nicht mehr möglich bzw. nicht mehr erwünscht. Andererseits sollen Kunststoffverbundteile aus schalltechnischen Gründen nicht zu steif ausgeführt werden. Infolgedessen kommt es Schwerkraftbedingt zu einem Durchhängen der Deckenpaneele, insbesondere in der Mitte zwischen den Befestigungselementen an den Seitenrändern. Grundsätzlich würde ein gleichmäßiges Durchhängen der Deckenpaneele im Innenraum eines Flugzeugs kein großes Problem darstellen, wären hier nicht Unterschiede des Durchhängens zwischen den einzelnen Deckenpaneelen. Dieser Versatz in senkrechter Richtung von einem Deckenpaneel zum benachbarten Deckenpaneel ist besonders störend. Verstärkt wird der negative optische Effekt dadurch, dass die Deckenpaneele durch oberhalb der Überkopfgepäckablagebehälter befindliche Beleuchtungskörper in einem relativ flachen Winkel mit Licht bestrahlt werden, wodurch es bereits bei sehr geringen Stufen zwischen den Deckenpaneelen zu Schattenbildung kommt.

Natürlich könnte man durch zusätzliche Befestigungselemente einem Durchhängen der Deckenpaneele bzw. einem Versatz zwischen den Deckenpaneelen entgegenwirken. Derartige zusätzliche Befestigungselemente würden jedoch das Gewicht und auch den Montage- und Demontageaufwand in unzulässiger Weise erhöhen. Dasselbe gilt für Versteifungsstrukturen, welche am Deckenpaneel angeordnet werden könnten.

Das Ziel der vorliegenden Erfindung ist daher die Schaffung eines oben genannten Deckenpaneels und einer oben genannten Deckenverkleidung, bei dem der Versatz in senkrechter Richtung von einem Deckenpaneel zum benachbarten Deckenpaneel minimiert werden kann. Gleichzeitig soll die Montage und Demontage des Deckenpaneels möglichst rasch und einfach ohne Zuhilfenahme von Werkzeug durchführbar sein. Schließlich soll in Fortbewegungsrichtung des Fahrzeuges sowie quer dazu ein gewisses Spiel bzw. eine Bewegung in gewissen Grenzen zulässig sein. Lose Bestandteile, welche bei der Montage und Demontage abhanden kommen könnten, sollen vermieden werden. Das erfindungsgemäße Deckenpaneel bzw. die erfindungsgemäße Deckenverkleidung soll besonders leicht und kostengünstig herstellbar sein. Nachteile bekannter Einrichtungen sollen vermieden oder zumindest reduziert werden. Darüber hinaus soll ein ungewolltes Lösen der formschlüssigen Verbindung zwischen Fixiereinrichtung und Gegenstück ausgeschlossen werden, wobei zugleich die Kraftaufwendung bei der Montage bzw. Demontage möglichst gering ausfallen soll.

Gelöst werden die Aufgaben durch ein oben genanntes Deckenpaneel, wobei jede Fixiereinrichtung und bzw. oder jedes Gegenstück ein Bestandteil aufweist, welches während des Herstellens und Lösens der formschlüssigen Verbindung gegen die Federkraft eines Federelements bewegbar ist. Die vorliegende Erfindung sieht an den Querrändern des Deckenpaneels Fixiereinrichtungen bzw. entsprechende Gegenstücke vor, durch die ein werkzeugloses Verbinden der Deckenpaneele zueinander möglich wird. Auf diese Weise kann ein Versatz der Deckenpaneele in senkrechter Richtung weitestgehend verhindert werden. Die Fixiereinrichtungen und Gegenstücke können relativ klein und billig hergestellt werden, sodass das Gesamtgewicht des Deckenpaneels nur unwesentlich erhöht wird und auch die entstehenden Mehrkosten sehr gering gehalten werden können. Wichtig bei der Ausgestaltung der Fixiereinrichtungen und Gegenstücke ist, dass die üblichen Arbeitsschritte beim Montieren oder Demontieren der Deckenpaneele nicht wesentlich verändert werden müssen, sodass nicht nur speziell geschultes Personal die Arbeitsschritte durchführen kann.

Gemäß einer Ausbildungsvariante können die Fixiereinrichtung und das Gegenstück durch entsprechend gestaltete Metallbiegeteile gebildet sein. Die Metallbiegeteile, der Fixiereinrichtung und des entsprechenden Gegenstücks werden so gestaltet, dass sie im montierten Zustand der Deckenpaneele ineinander greifen und eine formschlüssige Verbindung in senkrechter Richtung bewirkten. Nachteilig bei Metallbiegeteilen sind die entstehenden scharfen Kanten, welche zu Beschädigungen von Komponenten der Innenverkleidung des Fahrzeuges, beispielsweise von Kabeln, Isolierungen, etc., führen können. Zur Vermeidung dieses Problems können entsprechende Schutzbügel um die Metallbiegeteile angeordnet werden oder die Metallbiegeteile beispielsweise mit einer Kunststoffschicht versehen werden, was jedoch wieder den Herstellungsaufwand und das Gewicht erhöht.

Alternativ dazu kann die Fixiereinrichtung auch durch ein Gehäuse und einen im Gehäuse mittels eines Federelements federnd gelagerten Riegel und das dazu komplementäre Gegenstück durch eine Aufnahme für einen Teil des Riegels gebildet sein. Bei einer solchen Konstruktion können scharfe Kanten vermieden werden. Weiters können derartig ausgestaltete Fixiereinrichtungen und Gegenstücke relativ klein und somit leicht und auch kostengünstig hergestellt werden.

Vorzugsweise sind das Gehäuse, der Riegel und die Aufnahme aus Kunststoff gebildet. Dabei eignet sich für die Herstellung entsprechend gestalteter Komponenten insbesondere das Spritzgussverfahren.

Neben der federnden Lagerung des Riegels kann es auch von Vorteil sein, die Aufnahme am Gegenstück federnd zu lagern. Dadurch wird der während der Montage und Demontage eines Deckenpaneels notwendige Verfahrweg des Riegels gegenüber der Variante, bei der nur der Riegel federnd gelagert ist, im günstigsten Fall halbiert.

Um ein optimales Einschnappen des Riegels in der Aufnahme zu gewährleisten, ist der Riegel zum freien Ende hin vorzugsweise verjüngend ausgebildet. Diese verjüngende Ausbildung kann beispielsweise im Querschnitt kegelförmig gestaltet sein, wobei zur Vermeidung von scharfen Kanten diese entsprechend abgerundet sind.

Ebenso ist es möglich das freie Ende des Riegels im Querschnitt abgerundet auszubilden. Eine derartige Gestaltung erleichtert das Montieren und Demontieren des Deckenpaneels, da die Riegel der Fixierelemente entsprechend leicht in die Aufnahmen der Gegenstücke und wieder heraus bewegt werden können.

Das Federelement an der Fixiereinrichtung aber auch allenfalls am Gegenstück kann durch eine Spiralfeder, Blattfeder aber auch beispielsweise durch einen elastischen Kunststoffkörper gebildet sein. Bei der Wahl des geeigneten Federelements müssen u.a. die erwarteten Bewegungszyklen, die erwartete Federkraft und beispielsweise Umgebungseinflüsse berücksichtigt werden. Durch die Wahl bestimmter Federelement kann auch die gewünschte Federkraft eingestellt werden, welche beispielsweise für das Halten des jeweiligen Gewichts des Deckenpaneels entsprechend eingestellt werden muss.

Die zumindest eine Fixiereinrichtung und das zumindest eine Gegenstück sind vorzugsweise mit dem Kunststoffverbundelement des Deckenpaneels lösbar verbunden, beispielsweise verschraubt, vernietet oder mit Clipsen verbunden. Die Verschraubung der Fixiereinrichtung und des Gegenstücks erfolgt vorzugsweise werksseitig nach der Herstellung des Deckenpaneels. Durch die Verschraubung ist ein einfacher Austausch der Fixiereinrichtung und des Gegenstücks möglich.

Alternativ dazu kann natürlich die Fixiereinrichtung und das Gegenstück mit dem Kunststoffverbundelement verklebt werden. Allerdings ist ein Tausch der Fixiereinrichtung oder des Gegenstücks dann nicht bzw. nicht einfach möglich.

Vorzugsweise ist eine Fixiereinrichtung in der Mitte des Querrandes und ein Gegenstück in der Mitte des gegenüberliegenden Querrandes des Deckenpaneels angeordnet. Dadurch wird das Gewicht des Deckenpaneels durch lediglich ein Fixierelement und ein Gegenstück erhöht. Bei besonders großen bzw. breiten Deckenpaneelen kann es auch erforderlich sein, mehrere Fixiereinrichtungen und entsprechende Gegenstücke entlang der Querränder anzuordnen, um sicherzustellen, dass kein Versatz zwischen den Deckenpaneelen in senkrechter Richtung auftritt.

Gemäß einem weiteren Merkmal der Erfindung ist vorgesehen, dass die Fixiereinrichtung und das Gegenstück identisch aufgebaut sind. Dabei muss der Aufbau des Fixierelements bzw. Gegenstücks so gestaltet sein, dass ein Ineinandergreifen der gegenüberliegend angeordneten Fixiereinrichtung und des Gegenstücks möglich ist. Durch den identischen Aufbau der beiden Bestandteile können die Herstellungskosten weiter reduziert werden und Fehlmontagen vermieden werden.

Das Kunststoffverbundelement des Deckenpaneels ist vorzugsweise aus einem Wabenkern mit beiderseits angeordneten Prepreglagen gebildet. Ein derartiger an sich bekannter Aufbau von Kunststoffverbundwerkstoffen ist durch besonders niedriges Gewicht bei gleichzeitig hoher Steifigkeit charakterisiert. Durch entsprechende Konstruktionsvarianten, wie z.B. dem sogenannten "Crushen" des Wabenkerns kann auch die schallabsorbierende Wirkung der Deckenpaneele verbessert werden.

Vorzugsweise sind die Befestigungselemente an einem Seitenrand des Deckenpaneels durch entsprechende Loslager und die Befestigungselemente am gegenüberliegenden Seitenrand durch entsprechende Fixlager gebildet.

Zur Abdeckung des Spalts zwischen den Deckenpaneelen ist, an zumindest einem Querrand des Deckenpaneels eine Dichtungslippe, vorzugsweise aus Silikon, angeordnet. Die Dichtungslippe ist an jener Seite des Querrandes des Deckenpaneels angeordnet, welche dem Innenraum des Fahrzeugs abgewandt ist.

Die erfindungsgemäße Aufgabe wird auch durch eine oben genannte Deckenverkleidung für den Innenraum eines Fahrzeugs, insbesondere Flugzeugs, mit mehreren in Fortbewegungsrichtung des Fahrzeugs hintereinander angeordneten Deckenpaneelen mit den oben genannten Merkmalen gelöst.

Die vorliegende Erfindung wird anhand der beigefügten Zeichnungen näher erläutert.

Darin zeigen:
Fig. 1 eine perspektivische Ansicht auf zwei zwischen den Überkopfgepäckablagefächern angeordneten Deckenpaneelen in einem Flugzeug;
Fig. 2 die Draufsicht auf zwei Deckenpaneele;
Fig. 3 ein Schnittbild durch die Deckenpaneele gemäß Fig. 2 entlang der Schnittlinie III-III im Bereich des Überganges von einem Deckenpaneel zum anderen Deckenpaneel zur Veranschaulichung des Versatzes in Z-Richtung;
Fig. 4 zwei erfindungsgemäße Deckenpaneele in Draufsicht;
Fig. 5 eine Ausbildungsvariante einer Fixiereinrichtung und eines entsprechenden Gegenstücks in perspektivischer Ansicht;
Fig. 6 die Anordnung gemäß Fig. 5 in Seitenansicht;
Fig. 7 die Ausführungsform der Fixiereinrichtung gemäß Fig. 5 und Fig. 6. in Explosionsdarstellung;
Fig. 8 eine weitere Ausführungsform einer Fixiereinrichtung und eines zugehörigen Gegenstücks in Draufsicht;
Fig. 9 die Fixiereinrichtung bzw. das Gegenstück gemäß Fig. 8 in perspektivischer Ansicht;
Fig. 10 ein Schnittbild durch zwei Deckenpaneele mit einer Fixiereinrichtung bzw. einem Gegenstück gemäß den Fig. 8 und 9; und
Fig. 11 bis Fig. 13 verschiedene Ausführungsformen von Fixiereinrichtungen und Gegenstücken, welche durch entsprechende Metallbiegeteile herstellt sind.

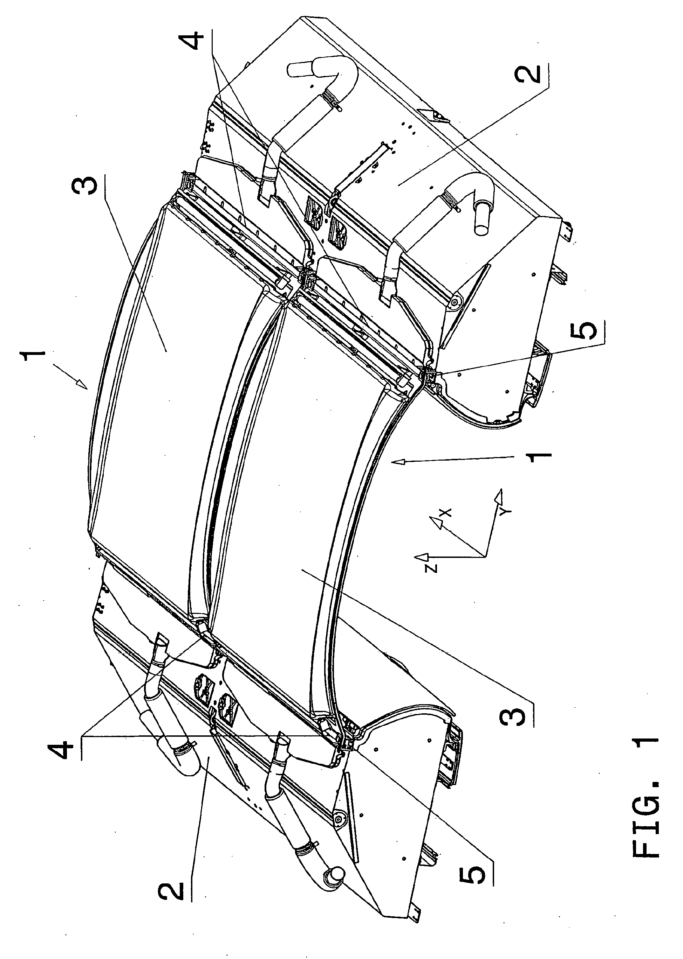

Fig. 1 zeigt eine perspektivische Ansicht auf einen Teil einer Deckenverkleidung im Innenraum eines Flugzeugs, umfassend zwei Deckenpaneele 1, welche den Innenraum des Flugzeugs oberhalb der Gepäckablagefächer 2 abgrenzen. Die Deckenpaneele 1 bestehen aus jeweils einem Kunststoffverbundelement 3 mit an den im Wesentlichen in Fortbewegungsrichtung X des Flugzeugs verlaufenden Seitenrändern 4 angeordneten Elementen 5 zur Befestigung an einer tragenden Struktur des Flugzeugs oder damit verbundenen Teilen. Details der Ausgestaltung der Befestigungselemente 5 sind in den Figuren nicht ersichtlich. Vorzugsweise sind die Befestigungselemente 5 an einem Seitenrand 4 durch entsprechende Loslager und am gegenüberliegenden Seitenrand 4 durch entsprechende Fixlager gebildet.

Da die Deckenpaneele 1 breiter sind als die lichte Breite zwischen den Gepäckablagefächern 2 müssen sie beim Ein- und Ausbau schräg zwischen den Gepäckablagefächern 2 eingefädelt und oberhalb der Gepäckablagefächer entsprechend befestigt werden.

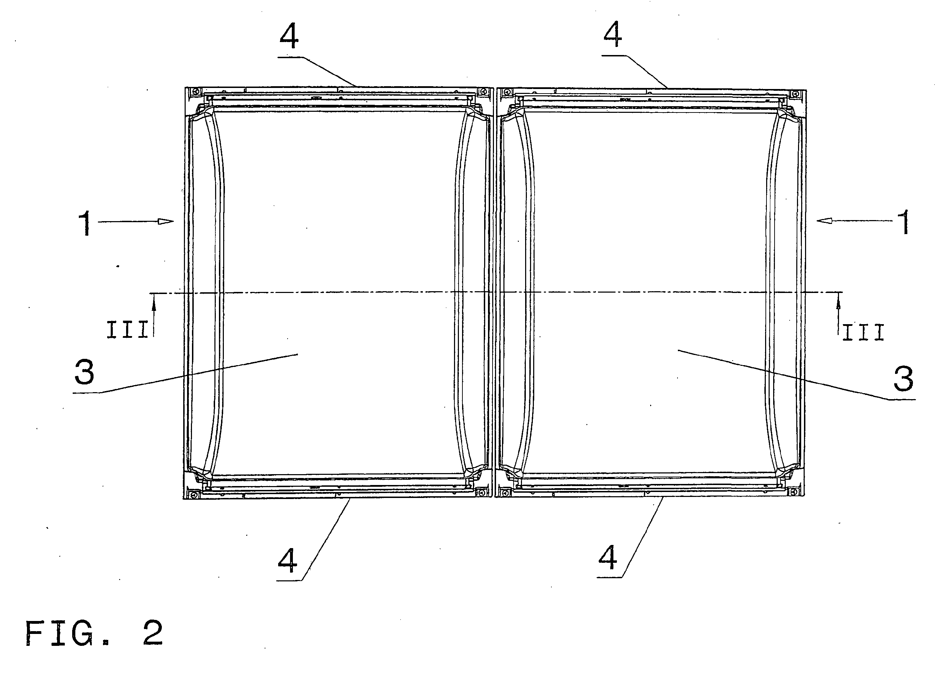

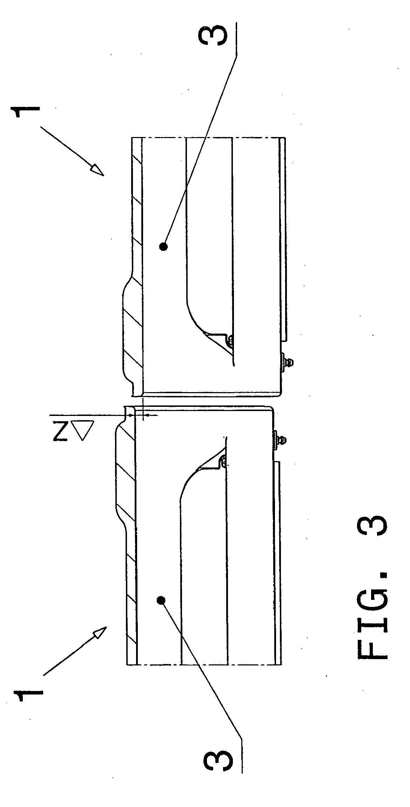

Wie in Fig. 2 und der Detailansicht gemäß Fig. 3 ersichtlich ist, kann es zwischen zwei Deckenpaneelen 1 zu einem Versatz ΔZ in Z-Richtung, also in im Wesentlichen senkrechter Richtung kommen. Ziel der vorliegenden Erfindung ist es, diesen Versatz ΔZ zwischen den Deckenpaneelen 1 möglichst gering zu halten.

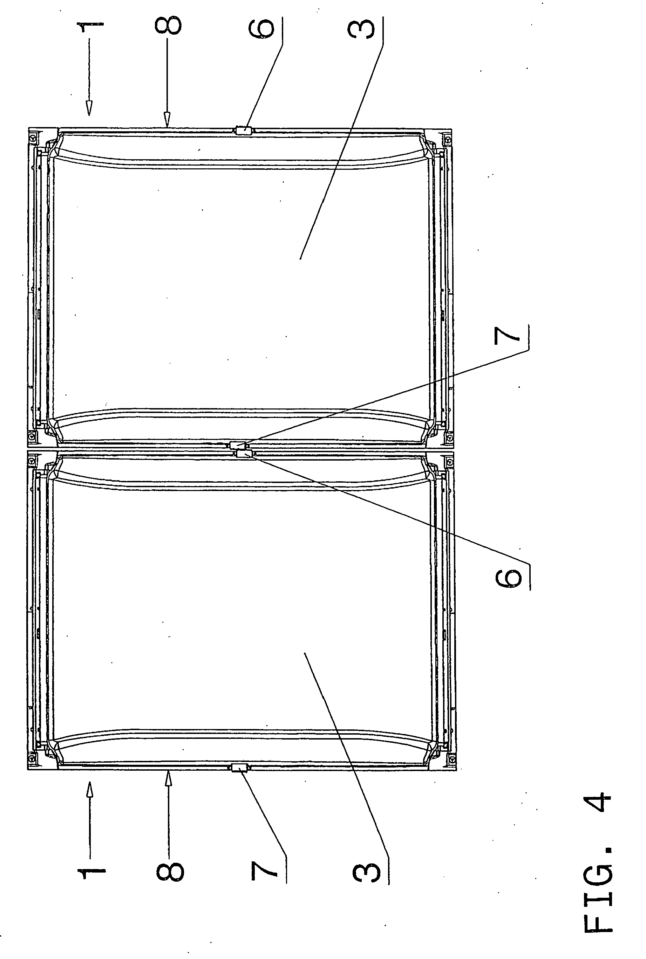

Wie aus Fig. 4 ersichtlich, wird dies durch zumindest eine Fixiereinrichtung 6 und ein Gegenstück 7 an jedem Deckenpaneel 1 bewerkstelligt, welche an dem im Wesentlich quer zur Fortbewegungsrichtung X, also in Richtung Y (siehe Fig. 1), angeordneten Querrand 8 vorgesehen ist. Die zumindest eine Fixiereinrichtung 6 am Querrand 8 des Deckenpaneels 1 ist komplementär zu dem zumindest einen Gegenstück 7 am gegenüberliegenden Querrand 8 des Deckenpaneels 1 ausgebildet, sodass beim Zusammenwirken jeder Fixiereinrichtung 6 mit jeweils einem Gegenstück 7 eine formschlüssige Verbindung zwischen zwei benachbarten Deckenpaneelen 1 in im Wesentlichen senkrechter Richtung, also in Richtung Z, werkzeuglos herstellbar und wieder lösbar ist. Erfindungsgemäß ist also vorgesehen, dass an den Querrändern 8 jedes Deckenpaneels 1 bzw. Kunststoffverbundelements 3 entsprechende Fixiereinrichtungen 6 bzw. Gegenstücke 7 angeordnet sind, welche die Deckenpaneele 1 untereinander verbinden, sodass ein Versatz ΔZ in senkrechter Richtung unterbunden werden kann. Wesentlich ist, dass die Verbindung zwischen den Deckenpaneelen 1 werkzeuglos herstellbar und wieder lösbar ist. Weiters soll das Gewicht der Deckenpaneele 1 durch die zumindest eine Fixiereinrichtung 6 und das zumindest eine Gegenstück 7 nicht wesentlich erhöht werden und auch die verbundenen Mehrkosten sollen möglichst gering ausfallen. Die Konstruktion soll auch den einzelnen Ausbau jedes Deckenpaneels 1 innerhalb einer Deckenverkleidung zulassen.

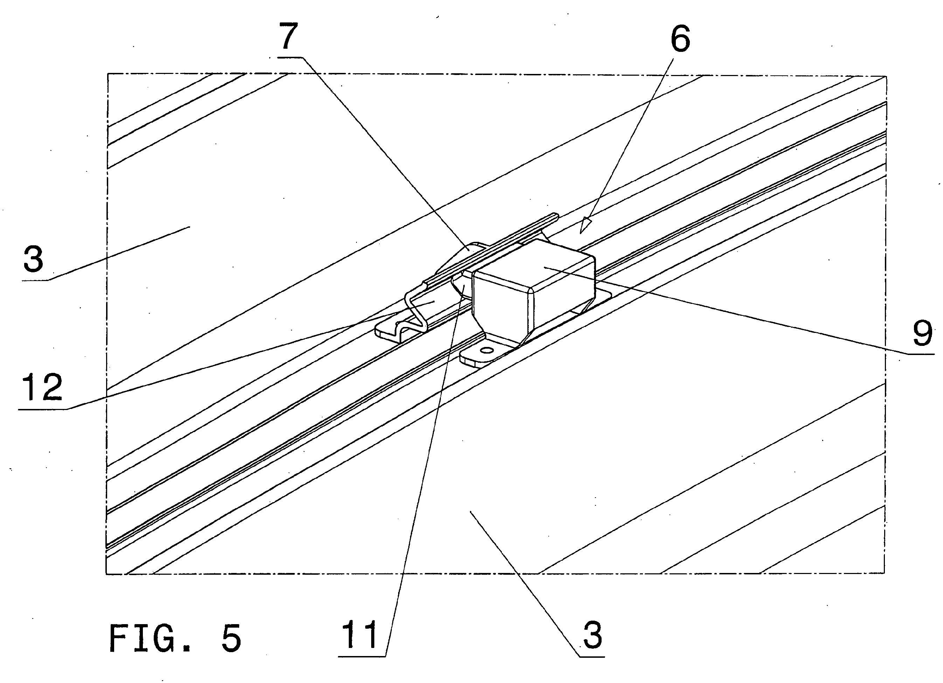

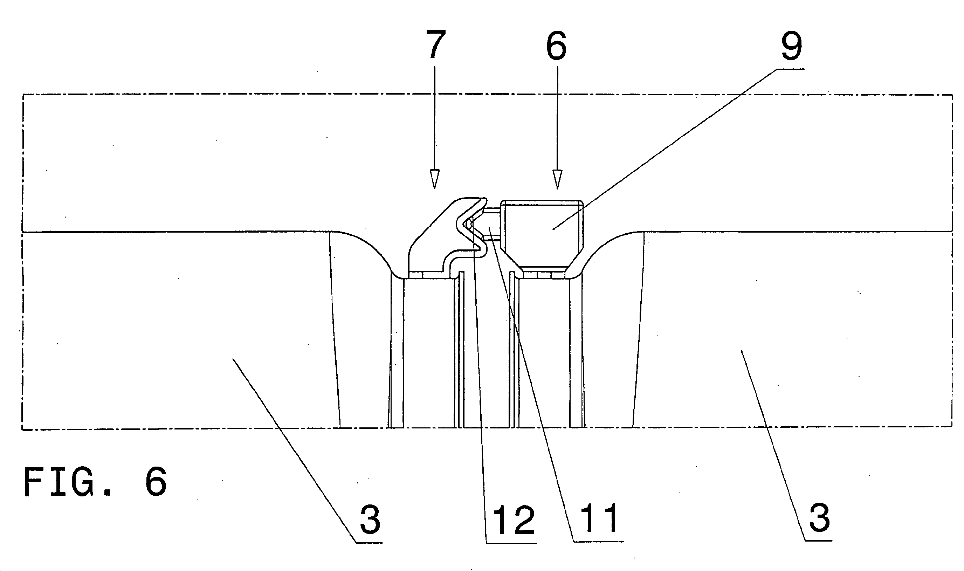

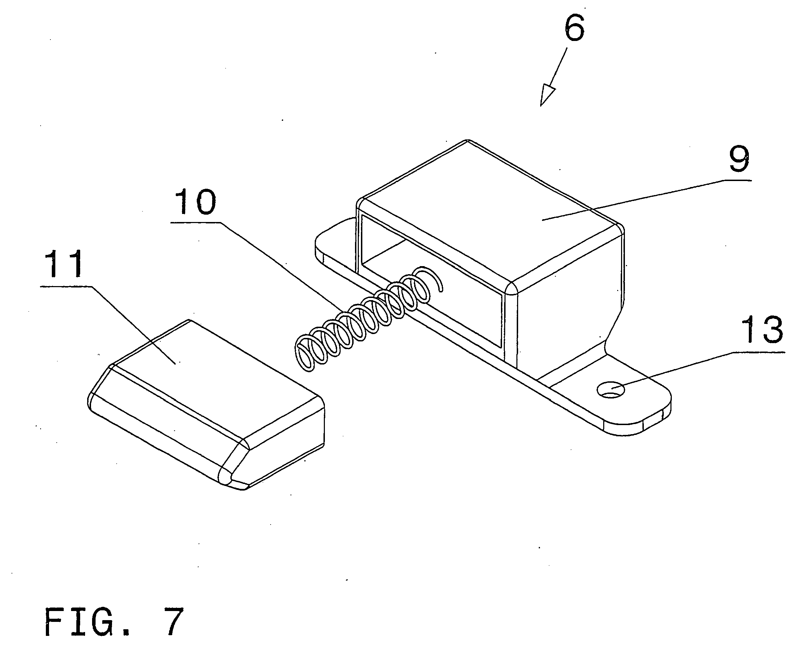

Die Fig. 5 und 6 zeigen eine Ausführungsform einer Fixiereinrichtung 6 und eines dazugehörigen komplementär gestalteten Gegenstücks 7, wobei die Fixiereinrichtung 6 durch ein Gehäuse 9 und einen im Gehäuse 9 mittels eines Federelements 10 federnd gelagerten Riegel 11 gebildet ist. Der Aufbau einer solchen Fixiereinrichtung 6 ist in der Explosionsdarstellung gemäß Fig. 7 ersichtlich. In diesem Fall ist das Federelement 10 durch eine Spiralfeder gebildet. Andere Ausführungsformen, beispielsweise durch eine Blattfeder oder ein elastischer Kunststoffkörper, sind auch denkbar. Das durch die Fixiereinrichtung 6 gebildete Gegenstück 7 ist durch eine Aufnahme 12 für einen Teil des Riegels 11 gebildet. Das Gehäuse 9, der Riegel 11 der Fixiereinrichtung sowie die Aufnahme 12 des Gegenstücks 7 sind vorzugsweise aus Kunststoff, insbesondere im Spritzgussverfahren, hergestellt. Zur Befestigung der Fixiereinrichtung 6 und des Gegenstücks 7 auf dem Kunststoffverbundelement 3 des Deckenpaneels 1 können Befestigungsschrauben, welche durch entsprechende Löcher 13 angeordnet werden, vorgesehen sein (nicht dargestellt). Ebenso ist eine Montage der Fixiereinrichtung 6 und des Gegenstücks 7 durch Verklebung mit dem Kunststoffverbundelement 3 denkbar. Das freie Ende des Riegels 11 der Fixiereinrichtung 6 ist verjüngend, im dargestellten Beispiel im Querschnitt kegelförmig, ausgebildet. Die Kanten werden dabei vorzugsweise abgerundet. Die Aufnahme 12 des Gegenstücks 7 ist komplementär zum freien Ende des Riegels 11 ausgebildet. So kann ein Einschnappen des Riegels 11 in der Aufnahme 12 beim Montieren der Deckenpaneele 1 und ein Verdrängen des Riegels 11 gegen die Federkraft des Federelements 10 beim Demontieren des Deckenpaneels 1 werkzeuglos erfolgen. Auch die Aufnahme 12 des Gegenstücks 7 kann federnd gelagert sein.

Anstelle einer zugespitzten Ausführungsvariante des freien Endes des Riegels 11 kann das freie Endes des Riegels 11 auch abgerundet ausgebildet sein. Wesentlich bei der Ausgestaltung der Fixiereinrichtung 6 und des Gegenstücks 7 ist, dass zur Montage und Demontage des Deckenpaneels 1 eine Verschiebung in Querrichtung, d.h. in Y-Richtung (siehe Fig. 1), und auch ein gewisses Spiel in Fortbewegungsrichtung X zulässig ist, wohingegen die Verbindung zwischen den Deckenpaneelen 1 in Z-Richtung kein Spiel bzw. keinen Versatz ΔZ zulassen soll.

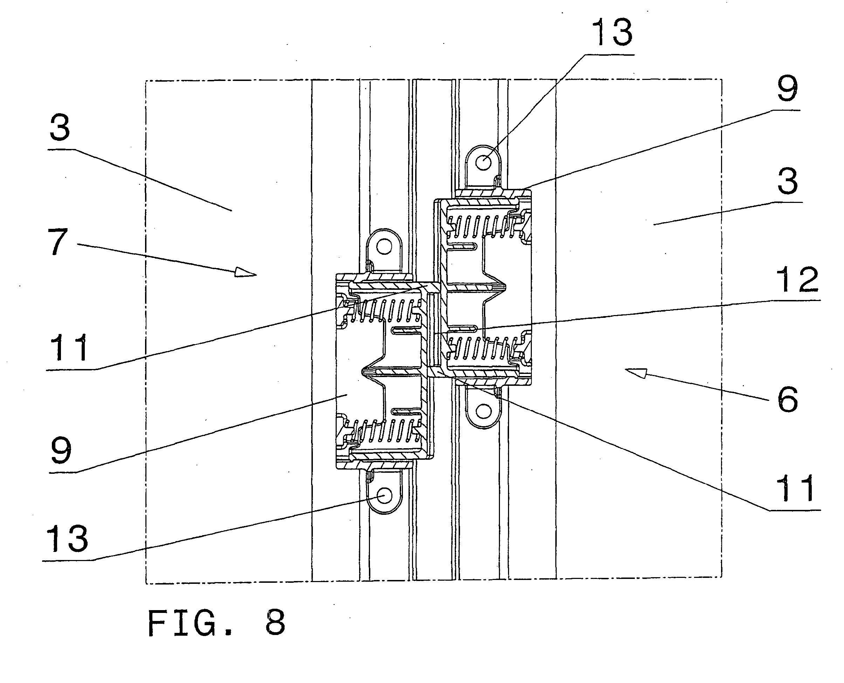

Fig. 8 zeigt eine weitere bevorzugte Ausgestaltung einer Fixiereinrichtung 6 und eines dazugehörigen Gegenstücks 7 durch zwei identisch aufgebaute Komponenten. Dementsprechend ist die Fixiereinrichtung 6 bzw. das Gegenstück 7 durch ein Gehäuse 9 mit einem Riegel 11 gebildet, der gleichzeitig die Aufnahme 12 für den Riegel 11 des Gegenstücks 7 darstellt. Eine baugleiche Ausgestaltung der Fixiereinrichtung 6 und des Gegenstücks 7 reduziert die Herstellungskosten und erleichtert auch die Montage am Deckenpaneel 1, da nicht darauf geachtet werden muss, an welchem Querrand 8 des Deckenpaneels 1 die Fixiereinrichtung 6 und das Gegenstück 7 befestigt werden müssen.

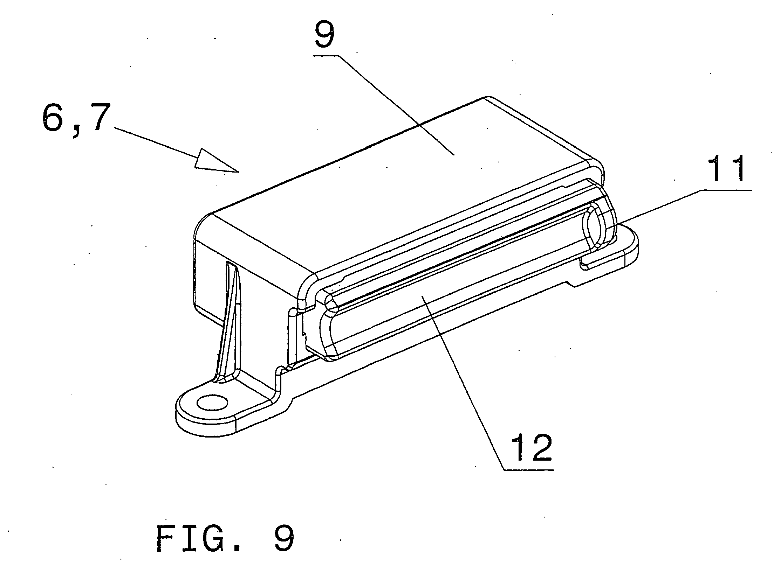

Fig. 9 zeigt noch eine perspektivische Ansicht einer solchen Fixiereinrichtung 6 bzw. eines solchen Gegenstücks 7.

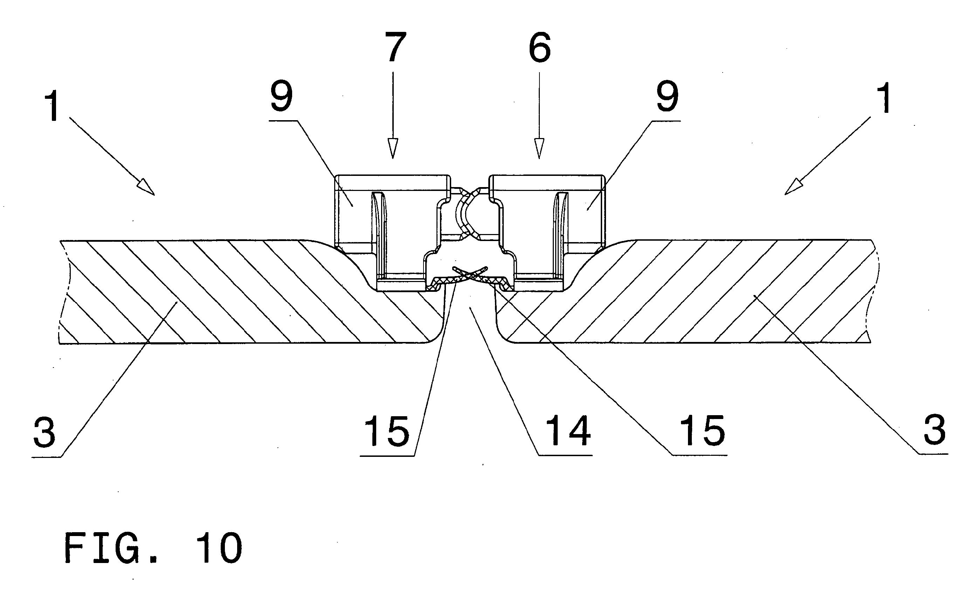

Fig. 10 zeigt ein Schnittbild durch zwei Deckenpaneele 1 im Bereich des Übergangs mit einer Fixiereinrichtung 6 bzw. einem Gegenstück 7 entsprechend den Fig. 8 und 9. Im Übergangsbereich der beiden Deckenpaneele 1 sind zur Überbrückung des Spalts 14 zwischen den beiden Deckenpaneelen 1 Dichtungslippen 15 angeordnet, welche beispielsweise aus Silikon hergestellt sein können. Das Gehäuse 9 der Fixiereinrichtung 6 bzw. des Gegenstücks 7 ist im dargestellten Ausführungsbeispiel entsprechend stufig angeordnet um Platz für die Dichtungslippen 15 zu bieten.

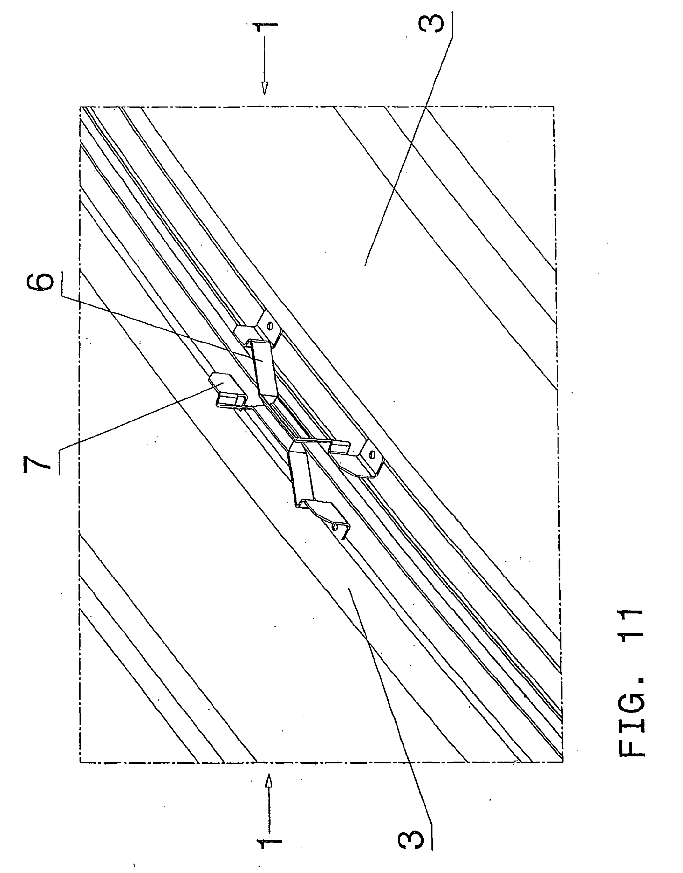

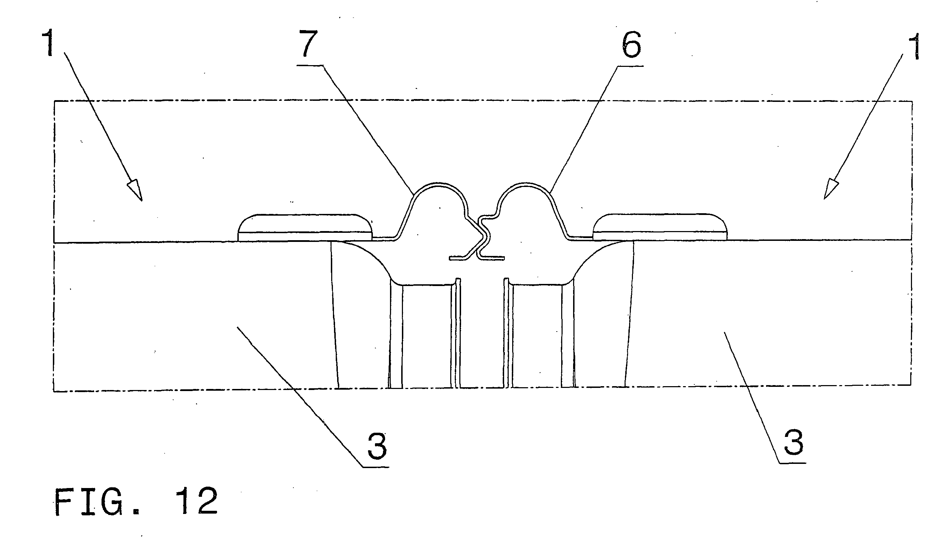

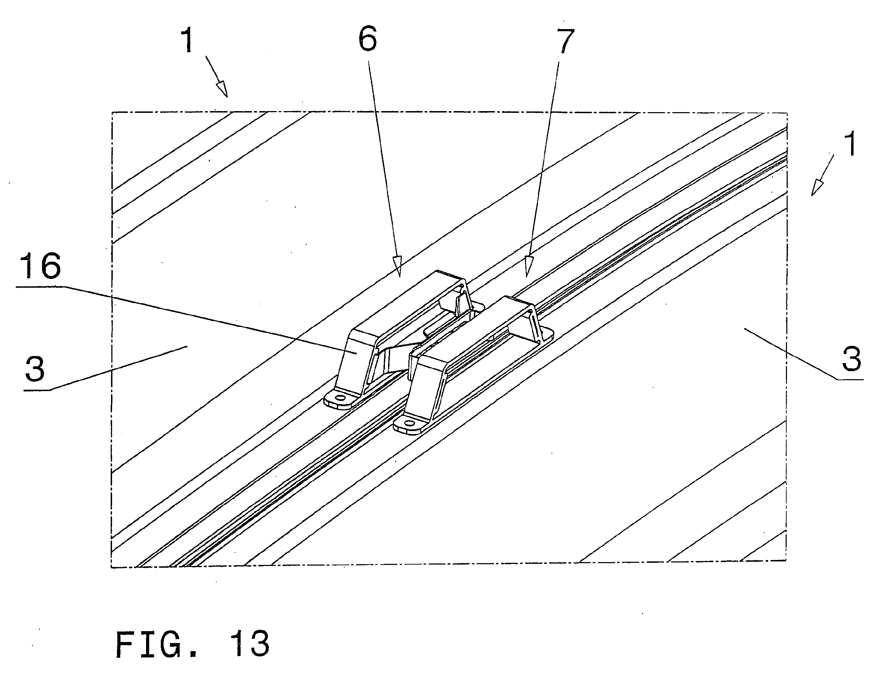

Die Fig. 11, 12 und 13 zeigen drei weitere Ausführungsformen von Fixiereinrichtungen 6 und komplementär dazu gestalteten Gegenstücken 7, wie sie durch Metallbiegeteile hergestellt werden können. Wesentlich dabei ist, dass die Gestaltung eine Bewegung in X- und Y-Richtung zulassen muss, wohingegen in Z-Richtung eine formschlüssige Verbindung hergestellt wird. Da Metallbiegeteile meist relativ scharfe Kanten aufweisen, ist es zweckmäßig, diese beispielsweise mit entsprechenden Abdeckbügeln 16 abzudecken und somit andere Komponenten der Innenverkleidung vor Beschädigung durch die scharfen Kanten der Metallbiegeteile zu schützen.

Die Abbildungen zeigen nur einige mögliche Ausführungsvarianten.

## Patentansprüche

1. Deckenpaneel (1) für die Verkleidung des Innenraums eines Fahrzeugs, insbesondere Flugzeugs, mit einem Kunststoffverbundelement (3) mit an den im Wesentlichen in Fortbewegungsrichtung (X) des Fahrzeuges verlaufenden Seitenrändern (4) angeordneten Elementen (5) zur Befestigung an einer tragenden Struktur des Fahrzeuges oder damit verbundenen Teilen, wobei an dem im Wesentlichen quer zur Fortbewegungsrichtung (X) angeordneten Querrand (8) zumindest eine Fixiereinrichtung (6) und an dem in Fortbewegungsrichtung (X) gesehen gegenüberliegenden Querrand (8) zumindest ein Gegenstück (7) vorgesehen ist, wobei die zumindest eine Fixiereinrichtung (6) komplementär zu dem zumindest einen Gegenstück (7) ausgebildet ist, und durch Zusammenwirken jeder Fixiereinrichtung (6) mit jeweils einem Gegenstück (7) eine formschlüssige Verbindung in im Wesentlichen senkrechter Richtung (Z) werkzeuglos herstellbar und wieder lösbar ist, **dadurch gekennzeichnet, dass** jede Fixiereinrichtung (6) und jedes Gegenstück (7) ein Bestandteil aufweist, welches während des Herstellens und Lösens der formschlüssigen Verbindung gegen die Federkraft eines Federelements bewegbar ist.

2. Deckenpaneel (1) nach Anspruch 1, **dadurch gekennzeichnet, dass** die Fixiereinrichtung (6) und das Gegenstück (7) durch Metallbiegeteile gebildet ist.

3. Deckenpaneel (1) nach Anspruch 1 oder 2, **dadurch gekennzeichnet, dass** die Fixiereinrichtung (6) durch ein Gehäuse (9) und einen im Gehäuse (9) mittels eines Federelements (10) federnd gelagerten Riegel (11) und das dazu komplementäre Gegenstück (7) durch eine Aufnahme (12) für einen Teil des Riegels (11) gebildet ist.

4. Deckenpaneel (1) nach Anspruch 3, **dadurch gekennzeichnet, dass** das Gehäuse (9), der Riegel (11) und die Aufnahme (12) aus Kunststoff gebildet sind.

5. Deckenpaneel (1) nach Anspruch 3 oder 4, **dadurch gekennzeichnet, dass** die Aufnahme (12) federnd gelagert ist.

6. Deckenpaneel (1) nach einem der Ansprüche 3 bis 5, **dadurch gekennzeichnet, dass** der Riegel (11) zum freien Ende hin verjüngend ausgebildet ist.

7. Deckenpaneel (1) nach Anspruch 6, **dadurch gekennzeichnet, dass** das freie Ende des Riegels (11) im Querschnitt abgerundet ausgebildet ist.

8. Deckenpaneel (1) nach einem der Ansprüche 3 bis 7, **dadurch gekennzeichnet, dass** das Federelement (10) durch eine Spiralfeder gebildet ist.

9. Deckenpaneel (1) nach einem der Ansprüche 3 bis 7, **dadurch gekennzeichnet, dass** das Federelement (10) durch eine Blattfeder gebildet ist.

10. Deckenpaneel (1) nach einem der Ansprüche 3 bis 7, **dadurch gekennzeichnet, dass** das Federelement (10) durch einen elastischen Kunststoffkörper gebildet ist.

11. Deckenpaneel (1) nach einem der Ansprüche 1 bis 10, **dadurch gekennzeichnet, dass** die zumindest eine Fixiereinrichtung (6) und das zumindest eine Gegenstück (7) mit dem Kunststoffverbundelement (3) lösbar verbunden ist.

12. Deckenpaneel (1) nach einem der Ansprüche 1 bis 10, **dadurch gekennzeichnet, dass** die zumindest eine Fixiereinrichtung (6) und das zumindest eine Gegenstück (7) mit dem Kunststoffverbundelement (3) verklebt sind.

13. Deckenpaneel (1) nach einem der Ansprüche 1 bis 12, **dadurch gekennzeichnet, dass** eine Fixiereinrichtung (6) in der Mitte des Querrandes (8) und ein Gegenstück (7) in der Mitte des gegenüberliegenden Querrandes (8) angeordnet sind.

14. Deckenpaneel (1) nach einem der Ansprüche 1 bis 13, **dadurch gekennzeichnet, dass** die Fixiereinrichtung (6) und das Gegenstück (7) identisch aufgebaut sind.

15. Deckenpaneel (1) nach einem der Ansprüche 1 bis 14, **dadurch gekennzeichnet, dass** das Kunststoffverbundelement (3) aus einem Wabenkern mit beiderseits angeordneten Prepreglagen gebildet ist.

16. Deckenpaneel (1) nach einem der Ansprüche 1 bis 15, **dadurch gekennzeichnet, dass** die Befestigungselemente (5) an einem Seitenrand (4) durch Loslager und die Befestigungselemente (5) am gegenüberliegenden Seitenrand (4) durch Fixlager gebildet sind.

17. Deckenpaneel (1) nach einem der Ansprüche 1 bis 16, **dadurch gekennzeichnet, dass** an zumindest einem Querrand (8) eine Dichtungslippe (15), vorzugsweise aus Silikon, angeordnet ist.

18. Deckenverkleidung für den Innenraum eines Fahrzeuges, insbesondere Flugzeugs, mit mehreren in Fortbewegungsrichtung (X) des Fahrzeugs hintereinander angeordneten Deckenpaneelen (1) nach einem der Ansprüche 1 bis 17.

## Claims

1. A ceiling panel (1) for lining the interior of a vehicle, in particular an aircraft, comprising a plastic composite element (3) having elements (5) disposed at the lateral edges (4) extending substantially in the movement direction (X) of the vehicle for fastening to a supporting structure of the vehicle or parts connected thereto, wherein at least one fixation device (6) is provided on the transverse edge (8) disposed substantially transversely to the movement direction (X) and that at least one counter piece (7) is provided on the opposite transverse edge (8) as viewed in the movement direction (X), wherein the at least one fixation device (6) is configured to complement the at least one counter piece (7), and a positive connection can be produced without tools in the substantially perpendicular direction (Z), and detached again, by interaction of each fixation device (6) with one counter piece (7) each, **characterised in that** each fixation device (6) and each counter piece (7) has a component part which can be moved against the spring force of a spring element during the making and releasing of the positive connection.

2. The ceiling panel (1) according to claim 1, **characterised in that** the fixation device (6) and the counter piece (7) are formed by bent metal parts.

3. The ceiling panel (1) according to claim 1 or 2, **characterised in that** the fixation device (6) is formed by a housing (9) and a latch (11) spring-mounted in the housing (9) by means of a spring element (10) and that the complementary counter piece (7) is formed by a receptacle (12) for a part of the latch (11).

4. The ceiling panel (1) according to claim 3, **characterised in that** the housing (9), the latch (11) and the receptacle (12) are formed from plastic.

5. The ceiling panel (1) according to claim 3 or 4, **characterised in that** the receptacle (12) is spring-mounted.

6. The ceiling panel (1) according to any one of claims 3 to 5, **characterised in that** the latch (11) is configured to taper towards the free end.

7. The ceiling panel (1) according to claim 6, **characterised in that** the free end of the latch (11) is configured to be rounded in cross-section.

8. The ceiling panel (1) according to any one of claims 3 to 7, **characterised in that** the spring element (10) is formed by a helical spring.

9. The ceiling panel (1) according to any one of claims 3 to 7, **characterised in that** the spring element (10) is formed by a leaf spring.

10. The ceiling panel (1) according to any one of claims 3 to 7, **characterised in that** the spring element (10) is formed by a resilient plastic body.

11. The ceiling panel (1) according to any one of claims 1 to 10, **characterised in that** the at least one fixation device (6) and the at least one counter piece (7) is detachably connected to the plastic composite element (3).

12. The ceiling panel (1) according to any one of claims 1 to 10, **characterised in that** the at least one fixation device (6) and the at least one counter piece (7) are adhesively bonded to the plastic composite element (3).

13. The ceiling panel (1) according to any one of claims 1 to 12, **characterised in that** a fixation device (6) is disposed at the centre of the transverse edge (8) and a counter piece (7) is disposed at the centre of the opposite transverse edge (8).

14. The ceiling panel (1) according to any one of claims 1 to 13, **characterised in that** the fixation device (6) and the counter piece (7) are constructed identically.

15. The ceiling panel (1) according to any one of claims 1 to 14, **characterised in that** the plastic composite element (3) is formed from a honeycomb core with prepreg layers disposed on both sides.

16. The ceiling panel (1) according to any one of claims 1 to 15, **characterised in that** the fastening elements (5) are formed on one lateral edge (4) by moveable bearings and the fastening elements (5) are formed on the opposite lateral edge (4) by fixed bearings.

17. The ceiling panel (1) according to any one of claims 1 to 16, **characterised in that** a sealing lip (15), preferably made of silicone, is disposed on at least one transverse edge (8).

18. Ceiling lining for the interior of a vehicle, in particular an aircraft, comprising a plurality of ceiling panels (1) according to any one of claims 1 to 17 disposed successively in the movement direction (X) of the vehicle.

## Revendications

1. Panneau de plafond (1) pour l'habillage de l'habitacle d'un véhicule, en particulier un avion, comportant un élément de jonction (3) en matière plastique avec des éléments (5), disposés sur les bords latéraux (4) s'étendant sensiblement dans le sens de déplacement (X) du véhicule et destinés à la fixation sur une structure porteuse du véhicule ou sur des parties reliées à celle-ci, au moins un dispositif de fixation (6) étant prévu sur le bord transversal (8) disposé sensiblement transversalement au sens de déplacement (X) et au moins une pièce antagoniste (7) étant prévue sur le bord transversal (8) opposé par référence au sens de déplacement (X), ledit au moins un dispositif de fixation (6) étant réalisé de manière complémentaire à ladite au moins une pièce antagoniste (7), et un assemblage par complémentarité de forme dans une direction (Z) sensiblement perpendiculaire pouvant être réalisé et à nouveau désolidarisé sans outil par la coopération de chaque dispositif de fixation (6) avec respectivement une pièce antagoniste (7), **caractérisé en ce que** chaque dispositif de fixation (6) et chaque pièce antagoniste (7) comportent une pièce qui, pendant la réalisation et la désolidarisation de l'assemblage par complémentarité de forme, peut être déplacée dans le sens opposé à la force d'un élément à ressort.

2. Panneau de plafond (1) selon la revendication 1, **caractérisé en ce que** le dispositif de fixation (6) et la pièce antagoniste (7) sont formés par des pièces métalliques pliées.

3. Panneau de plafond (1) selon la revendication 1 ou 2, **caractérisé en ce que** le dispositif de fixation (6) est constitué d'un boîtier (9) et d'un pêne (11), monté de manière flexible au moyen d'un élément à ressort (10) dans le boîtier (9), et la pièce antagoniste (7) complémentaire audit dispositif de fixation est constituée d'un logement (12) destiné à une partie du pêne (11).

4. Panneau de plafond (1) selon la revendication 3, **caractérisé en ce que** le boîtier (9), le pêne (11) et le logement (12) sont réalisés en matière plastique.

5. Panneau de plafond (1) selon la revendication 3 ou 4, **caractérisé en ce que** le logement (12) est monté de manière flexible.

6. Panneau de plafond (1) selon l'une quelconque des revendications 3 à 5, **caractérisé en ce que** le pêne (11) est réalisé en se rétrécissant vers l'extrémité libre.

7. Panneau de plafond (1) selon la revendication 6, **caractérisé en ce que** l'extrémité libre du pêne (11) est réalisée avec une section transversale arrondie.

8. Panneau de plafond (1) selon l'une quelconque des revendications 3 à 7, **caractérisé en ce que** l'élément à ressort (10) est formé par un ressort hélicoïdal.

9. Panneau de plafond (1) selon l'une quelconque des revendications 3 à 7, **caractérisé en ce que** l'élément à ressort (10) est formé par un ressort à lames.

10. Panneau de plafond (1) selon l'une quelconque des revendications 3 à 7, **caractérisé en ce que** l'élément à ressort (10) est formé par un corps élastique en matière plastique.

11. Panneau de plafond (1) selon l'une quelconque des revendications 1 à 10, **caractérisé en ce que** ledit au moins un dispositif de fixation (6) et ladite au moins une pièce antagoniste (7) sont reliés de manière amovible à l'élément de jonction (3) en matière plastique.

12. Panneau de plafond (1) selon l'une quelconque des revendications 1 à 10, **caractérisé en ce que** ledit au moins un dispositif de fixation (6) et ladite au moins une pièce antagoniste (7) sont collés à l'élément de jonction (3) en matière plastique.

13. Panneau de plafond (1) selon l'une quelconque des revendications 1 à 12, **caractérisé en ce qu'**un dispositif de fixation (6) est disposé au milieu du bord transversal (8) et une pièce antagoniste (7) est disposée au milieu du bord transversal (8) opposé.

14. Panneau de plafond (1) selon l'une quelconque des revendications 1 à 13, **caractérisé en ce que** le dispositif de fixation (6) et la pièce antagoniste (7) sont réalisées de manière identique.

15. Panneau de plafond (1) selon l'une quelconque des revendications 1 à 14, **caractérisé en ce que** l'élément de jonction (3) en matière plastique est constitué d'une âme alvéolaire avec des couches préimprégnées disposées de part et d'autre.

16. Panneau de plafond (1) selon l'une quelconque des revendications 1 à 15, **caractérisé en ce que** les éléments de fixation (5) sont formés sur un bord latéral (4) par des paliers libres et les éléments de fixation (5) sont formés sur le bord latéral (4) opposé par des paliers fixes.

17. Panneau de plafond (1) selon l'une quelconque des revendications 1 à 16, **caractérisé en ce qu'**une lèvre d'étanchéité (15), de préférence en silicone, est disposée sur au moins un bord transversal (8).

18. Habillage de plafond pour l'habitacle d'un véhicule, en particulier un avion, comportant plusieurs panneaux de plafond (1) selon l'une quelconque des revendications 1 à 17, disposés les uns derrière les autres dans le sens de déplacement (X) du véhicule.
